# DEMANDE DE BREVET EUROPEEN

(11) **EP 2 924 900 A1**
(43) Date de publication de la demande: **30.09.2015**
(21) Numéro de dépôt: 15160805.6
(22) Date de dépôt: 25.03.2015
(51) Int. Cl.: H04J 3/16, H04J 14/02, H04Q 11/00

(54) **Procédé de routage de données au sein d'un réseau optique opérateur**

(30) Priorité: 25.03.2014 FR 1452529
(71) Demandeur: Bouygues Telecom, 75116 Paris (FR)
(72) Inventeur: Lemonnier, Nicolas, 91300 Massy (FR); Cauchie, Grégory, 92160 Antony (FR)
(74) Mandataire: Regimbeau

(57) **Abrégé**

La présente invention concerne un procédé de routage de données à transmettre au sein d'un réseau optique opérateur (20) caractérisé en ce qu'il comprend la mise en oeuvre d'étapes de :
(a) séparation par un routeur de bordure d'origine (PE-a) de données à transmettre au sein du réseau optique opérateur (20) depuis le routeur de bordure d'origine (PE-a) en une pluralité de flux chacun associé à un réseau local virtuel (VLAN) selon le routeur de bordure (PE-b, PE-c) auquel les données sont destinées, chaque VLAN étant associé à un routeur de bordure de destination (PE-b, PE-c) ;
(b) encapsulation de chaque flux dans un conteneur ODU de taille flexible (ODU-Flex) associé à un chemin dans le réseau optique opérateur (20) défini par une séquence de canaux optiques (OCH) à parcourir ;
(c) pour chaque OCH dudit chemin, encapsulation par un premier équipement de transmission (WDM-a, WDM-b, WDM-c, WDM-d) des conteneurs ODU-Flex à transporter via l'OCH dans un conteneur ODU de taille fixe associé à l'OCH ; et extraction par un deuxième équipement de transmission (WDM-a, WDM-b, WDM-c, WDM-d) de chaque conteneur ODU-Flex dans le conteneur ODU de taille fixe associé à l'OCH ;
(d) extraction du flux de données dans chaque conteneur ODU-Flex ; et recombinaison des flux.

## Description

### DOMAINE TECHNIQUE GENERAL

La présente invention concerne le domaine des communications optiques.

Plus précisément, elle concerne un procédé de routage de données à transmettre au sein d'un réseau optique opérateur.

### ETAT DE L'ART

Le multiplexage en longueur d'onde (WDM, « Wavelength Division Multiplexing ») est une technique utilisée en communications optiques qui permet de faire passer plusieurs signaux de longueurs d'onde différentes sur une seule fibre optique, en les mélangeant à l'entrée à l'aide d'un multiplexeur, et en les séparant à la sortie au moyen d'un démultiplexeur. Ces opérations sont réalisées par des équipements dits de transmission (communément appelés équipements WDM) et assurant la traduction des signaux électriques en signaux optiques et inversement.

Les réseaux opérateur IP (communément appelés « backbones IP », ou coeurs de réseau IP) sont composés d'équipements appelés routeurs. Les routeurs s'interconnectent typiquement via ces équipements de transmission WDM. Les routeurs dits PE (pour « Provider Edge », en français routeurs de bordure) d'un réseau opérateur sont des routeurs « frontières » qui permettent la connectivité IP des clients de l'opérateur (via des routeurs CE, i.e. « Consumer Edge ») vers les autres routeurs du réseau, et d'autre part la continuité de communication du réseau avec les réseaux d'autres opérateurs.

Les équipements WDM utilisent la norme OTN (« Optical Transport Network », également appelée ITU-T Recommandation G.709). Cette norme associe une interface physique d'un équipement (interface physique origine) à une interface physique destination. Deux interfaces physiques définissent les extrémités d'un canal optique OCH (Optical Channel). La connexion entre deux équipements clients est matérialisée dans la norme G.709 par la création d'un lien ODU (Optical Channel Data Unit).

Chaque interface physique d'un équipement WDM est appairée avec une interface dite « client » permettant la connexion de l'équipement WDM à un routeur.

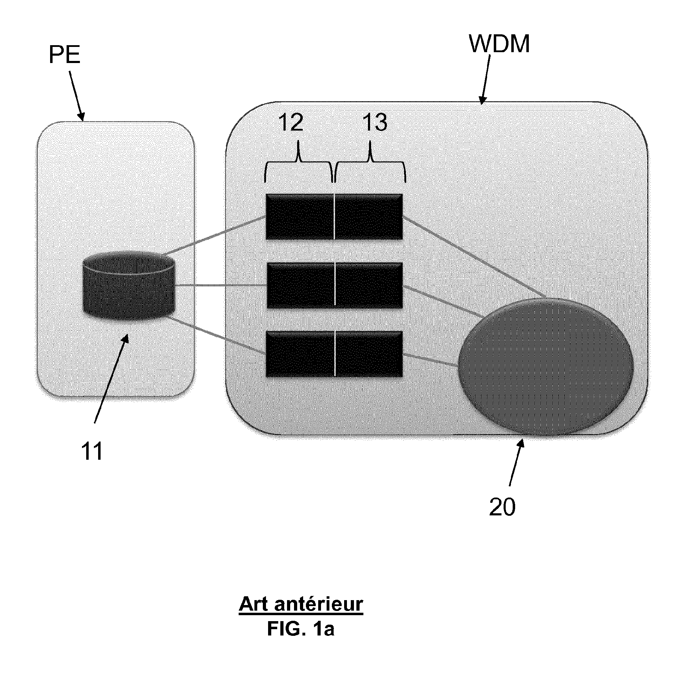

On voit par exemple sur la **figure 1a** un exemple de routeur PE et un équipement WDM connectés via trois couples interface client 12 (par exemple trois interfaces 10 gigabit Ethernet conformes à la norme IEEE 802.3) / interface physique 13. Chaque interface physique 13 correspond à un port ligne WDM (OCH).

Ainsi, pour avoir un maillage complet, dans un réseau à *n* équipements il faudrait au moins *n-1* interfaces sur chaque équipement WDM (en pratique plus car il faut dupliquer les liens nécessitant une capacité élevée), soit un total de l'ordre de O(*n²*). Dans la mesure où un réseau opérateur moyen comprend le plus souvent plusieurs dizaines de routeurs PE (et ce nombre est croissant) et au moins autant d'équipements WDM, un tel maillage est inenvisageable.

Pour répondre à cette problématique, on utilise des routeurs dit routeurs P (« Provider », en français routeurs de transit) appelés également commutateurs de transit, chacun également associé à un équipement WDM et connecté à une pluralité de routeurs PE (et éventuellement à d'autres routeurs P), qui servent à assurer le multiplexage temporel entre les différents chemins, ce qui a pour effet de diminuer drastiquement le nombre d'interface sur les routeurs. En effet, un nombre d'interfaces de l'ordre de *O(n)* suffit alors techniquement.

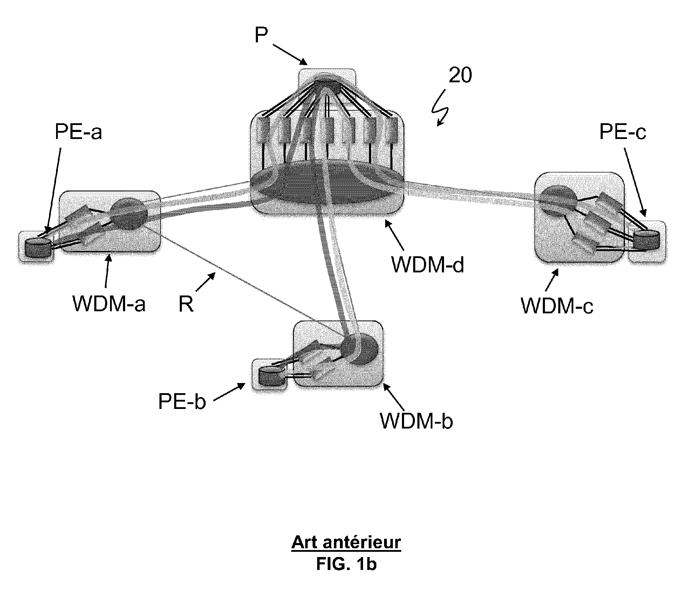

La **figure 1b** représente un exemple d'un fragment d'un réseau comprenant un routeur P et trois routeurs PE-a, PE-b, PE-c interconnectés. Chaque routeur est associé à un équipement WDM (respectivement les équipements WDM-d, WDM-a, WDM-b, WDM-c) via lequel il est connecté au réseau optique 20. Comme l'on voit, toutes les données transitent via le routeur P, y compris les données échangées entre les routeurs PE-A et PE-b malgré l'existence d'une route directe R.

Ainsi, les solutions à base de routeur P sont largement utilisées et apportent satisfaction, même si on constate qu'elles sont perfectibles. Les routeurs P sont en effet des équipements supplémentaires qui ont un coût, une consommation d'électricité élevée (ce d'autant plus qu'un équipement WDM associé à un routeur P doit présenter un nombre élevé d'interfaces, typiquement jusqu'à 640 interfaces 10 gigabits Ethernet), et nécessitent une régénération systématique du signal optique. De plus, la centralisation du trafic entraîne une augmentation du trajet parcouru et donc une augmentation de la latence perçue par les clients, voire un risque de paralysie massive du réseau si une fibre à proximité d'un routeur P était coupée suite à un incident.

Il serait ainsi souhaitable de disposer d'une architecture de réseau backbone qui soit plus distribuée, plus résiliente, plus rapide, moins complexe et moins couteuse.

### PRESENTATION DE L'INVENTION

Selon un premier aspect, la présente invention se rapporte donc à un procédé de routage de données à transmettre au sein d'un réseau optique opérateur depuis au moins un routeur de bordure d'origine vers au moins un routeur de bordure de destination, chaque routeur de bordure étant associé à un équipement de transmission configuré pour transmettre des données au sein du réseau optique opérateur pour ledit routeur de bordure, le procédé étant caractérisé en ce qu'il comprend la mise en oeuvre d'étapes de :
(a) séparation par le routeur de bordure d'origine des données à transmettre au sein du réseau optique opérateur depuis le routeur de bordure d'origine en une pluralité de flux chacun associé à un réseau local virtuel (VLAN) selon le routeur de bordure auquel les données sont destinées, chaque VLAN étant associé à un routeur de bordure de destination ;
(b) encapsulation par le routeur de bordure d'origine ou l'équipement de transmission associé de chaque flux dans un conteneur ODU de taille flexible (ODU-Flex), ledit conteneur ODU-Flex étant associé à un chemin dans le réseau optique opérateur entre le routeur de bordure d'origine et le routeur de bordure de destination dudit flux, ledit chemin étant défini par une séquence de canaux optiques (OCH) à parcourir, chaque OCH reliant un premier et un deuxième équipements de transmission du réseau optique opérateur ;
(c) pour chaque OCH dudit chemin, encapsulation par le premier équipement de transmission des conteneurs ODU-Flex à transporter via l'OCH dans un conteneur ODU de taille fixe associé à l'OCH ; et extraction par le deuxième équipement de transmission de chaque conteneur ODU-Flex dans le conteneur ODU de taille fixe associé à l'OCH ;
(d) extraction par le routeur de bordure de destination ou l'équipement de transmission associé du flux de données dans chaque conteneur ODU-Flex ; et recombinaison des flux.

Selon d'autres caractéristiques avantageuses et non limitatives du procédé selon le premier aspect :
- l'étape (c) est mise en oeuvre uniquement au sein d'équipements de transmission de sorte à ce qu'aucun flux ne transite par un routeur de bordure autre que les routeurs de bordure d'origine et de destination du flux ;
- l'équipement de transmission associé au routeur de bordure d'origine est directement connecté à l'équipement de transmission associé au routeur de bordure de destination, de telle sorte que le chemin dans le réseau optique opérateur entre le routeur de bordure d'origine et le routeur de bordure de destination ne comprend qu'un OCH, l'étape (c) consistant en l'encapsulation par l'équipement de transmission associé au routeur de bordure d'origine des conteneurs ODU-Flex à transporter via l'OCH dans un conteneur ODU de taille fixe associé à l'OCH ; et l'extraction par l'équipement de transmission associé au routeur de bordure de destination de chaque conteneur ODU-Flex dans le conteneur ODU de taille fixe associé à l'OCH ;
- l'équipement de transmission associé au routeur de bordure d'origine est connecté à l'équipement de transmission associé au routeur de bordure de destination via au moins un équipement de transmission intermédiaire, de telle sorte que le chemin dans le réseau optique opérateur entre le routeur de bordure d'origine et le routeur de bordure de destination comprend au moins un premier et un deuxième OCH, l'étape (c) comprenant l'extraction par l'équipement de transmission intermédiaire de chaque conteneur ODU-Flex dans un conteneur ODU de taille fixe associé au premier OCH ; et l'encapsulation par l'équipement de transmission intermédiaire des conteneurs ODU-Flex à transporter via le deuxième OCH dans un conteneur ODU de taille fixe associé au deuxième OCH.

Un deuxième aspect de l'invention concerne un système de routage de données au sein d'un réseau optique opérateur comprenant une pluralité de routeurs de bordure chacun associé à un équipement de transmission configuré pour transmettre des données au sein du réseau pour ledit routeur de bordure, caractérisé en ce que :
- au moins un routeur de bordure d'origine est configuré pour séparer des données à transmettre au sein du réseau optique opérateur en une pluralité de flux chacun associé à un réseau local virtuel (VLAN) selon le routeur de bordure auquel les données sont destinées, chaque VLAN étant associé à un routeur de bordure de destination ;
- le routeur de bordure d'origine ou l'équipement de transmission associé est configuré pour encapsuler chaque flux dans un conteneur ODU de taille flexible (ODU-Flex), ledit conteneur ODU-Flex étant associé à un chemin dans le réseau optique opérateur entre le routeur de bordure d'origine et le routeur de bordure de destination dudit flux, ledit chemin étant défini par une séquence de canaux optiques (OCH) à parcourir, chaque OCH reliant un premier et un deuxième équipements de transmission du réseau optique opérateur ;

- le routeur de bordure de destination ou l'équipement de transmission associé est configuré pour extraire le flux de données de chaque conteneur ODU-Flex, et recombiner les flux ;
- chaque équipement de transmission est configuré pour :
   o encapsuler des conteneurs ODU-Flex à transporter via un OCH pour lequel il est le premier équipement de transmission dans un conteneur ODU de taille fixe associé à l'OCH ; et
   o extraire chaque conteneur ODU-Flex d'un conteneur ODU de taille fixe associé à un OCH pour lequel il est le deuxième équipement de transmission ;

Selon d'autres caractéristiques avantageuses et non limitatives du système selon le deuxième aspect :
- les équipements de transmission sont uniquement connectés à des routeurs de bordure et/ou d'autres équipements de transmission ;
- le système ne comprend aucun routeur de transit ;
- chaque équipement de transmission comprend au moins une interface physique et une matrice OTN ;
- chaque équipement de transmission associé à un routeur de bordure comprend en outre au moins une interface client permettant la connexion de l'équipement de transmission au routeur de bordure, l'interface client étant connectée à l'interface physique via la matrice OTN ;
- chaque interface client d'un équipement de transmission est une interface 100 gigabits Ethernet.

Selon un troisième et un quatrième aspect, l'invention concerne un produit programme d'ordinateur comprenant des instructions de code pour l'exécution d'un procédé selon le premier aspect de l'invention de routage de données à transmettre au sein d'un réseau optique opérateur ; et des moyens de stockage lisibles par un équipement informatique sur lesquels un produit programme d'ordinateur comprend des instructions de code pour l'exécution d'un procédé selon le deuxième aspect de l'invention de routage de données à transmettre au sein d'un réseau optique opérateur.

### PRESENTATION DES FIGURES

D'autres caractéristiques et avantages de la présente invention apparaîtront à la lecture de la description qui va suivre d'un mode de réalisation préférentiel. Cette description sera donnée en référence aux dessins annexés dans lesquels :
- la figure 1a est un schéma d'un routeur de bordure connecté à un équipement de transmission selon une architecture connue ;
- la figure 1b est un schéma d'un système connu de routage de données au sein d'un réseau optique opérateur ;
- la figure 2 est un schéma illustrant la norme OTN ;
- la figure 3a est un schéma d'un routeur de bordure connecté à un équipement de transmission selon une architecture pour la mise en oeuvre d'un procédé de routage de données à transmettre au sein d'un réseau optique opérateur selon l'invention ;
- la figure 3b est un schéma d'un mode de réalisation préféré d'un système selon l'invention de routage de données au sein d'un réseau optique opérateur ;
- la figure 4a est un schéma illustrant la combinaison de mapping VLAN et d'encapsulation ODU-Flex mise en oeuvre dans un premier mode de réalisation du procédé selon l'invention ;
- la figure 4b est un schéma illustrant la combinaison de mapping VLAN et d'encapsulation ODU-Flex mise en oeuvre dans un deuxième mode de réalisation du procédé selon l'invention.

### DESCRIPTION DETAILLEE

### Conteneur ODU

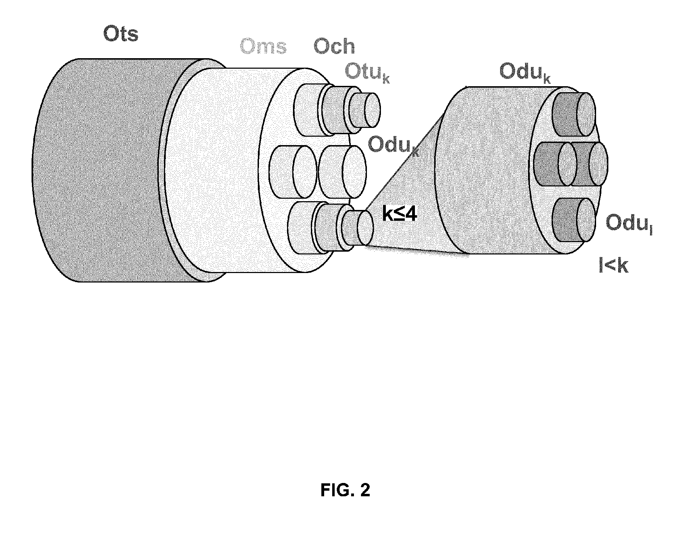

La norme OTN évoquée précédemment décrit une structure hiérarchisée de transport de données dont l'élément de base est le conteneur ODU (« Optical channel Data Unit »), comme représenté sur la **figure 2****.** Le payload (en d'autres termes les données utiles, par opposition aux en-têtes) d'un ODU (appelé OPU, « Optical channel Payload Unit ») contient les données à transporter sur le réseau optique.

L'ODU est un signal encapsulé dans un OTU (« Optical Transport Unit ») lui-même encapsulé dans un canal OCH (« Optical Channel »), qui correspond à une « couleur » (en d'autres termes une longueur d'onde) de signal dans la fibre optique. L'ensemble des canaux multiplexés dans un signal composite (multi-longueurs d'onde) forme un OMS (« Optical Multiplex Section »), lui-même contenu dans un OTS (« Optical Transmission Section ») qui forme la couche la plus basique de la fibre optique.

On connait plusieurs niveaux d'ODU selon leur capacité en termes de débit :
- ODU-0 → 1Gb/s ;
- ODU-1 → 2.5Gb/s ;
- ODU-2 → 10Gb/s ;
- ODU-3 → 40Gb/s ;
- ODU-4 → 100Gb/s ;

Les ODU peuvent être mappés (contenus) les uns dans les autres selon une combinaison compatible avec leurs débits. Par exemple un signal ODU-4 peut transporter jusqu'à dix signaux ODU-2 eux-mêmes transportant chacun jusqu'à 4 signaux ODU-1 chacun.

Dans sa configuration de base, l'OTN dit « non-flexible », chaque ODU est considéré comme un tuyau fixe. En d'autres termes, à une interface donnée d'un routeur (dédiée à une destination, le plus souvent celle du routeur P, comme expliqué) est associée un ou plusieurs ODU prédéterminés. Par exemple, pour une interface 10 gigabit Ethernet, un ODU-2 est affecté. Plusieurs interfaces (et donc plusieurs ODU) peuvent être prévus pour une destination vers laquelle le débit est élevé. Cette rigidité pose problème dans la mesure où une part de la bande passante est gâchée si le débit affecté à un lien n'est pas atteint.

La technologie ODU-Flex, récemment intégrée dans la norme G.709, permet de s'affranchir de ce problème et propose des ODU de taille variable.

Un ODU-Flex est un ODU à part entière qui peut être défini comme NxODU-0 (avec N compris entre 1 et 100). On a ainsi une granularité de 1 Gb/s avec un débit max de 100Gb/s.

Il est en outre connu de combiner l'utilisation d'ODU-Flex avec du « VLAN mapping » (en français « mise en correspondance » ou « association un à un », d'un VLAN et d'un ODU). Un VLAN (« Virtual Local Access Network ») est un réseau virtuel local. Une pluralité de VLANs peut coexister au niveau d'un routeur en tant que réseaux logiques indépendants. Un flux de données reçu par un routeur PE depuis un client peut être séparé en une pluralité de sous-flux appartenant à plusieurs VLAN distincts, chacun mappé avec un ODU-Flex. Cela permet de réduire le nombre de ports nécessaires pour un routeur PE et de diminuer la consommation énergétique.

### Architecture globale

Comme expliqué précédemment, la Demanderesse a constaté qu'il n'existe aujourd'hui que deux solutions opposées : soit un maillage complet de tous les routeurs PE, soit une structure en étoile autour d'un ou plusieurs routeurs P.

Est ainsi proposée une solution permettant la transmission directe d'un routeur PE à un autre sans passer par un routeur P, et ce avec un nombre d'interfaces bien plus réduit. Plus précisément, le réseau lui-même joue le rôle de routeur P.

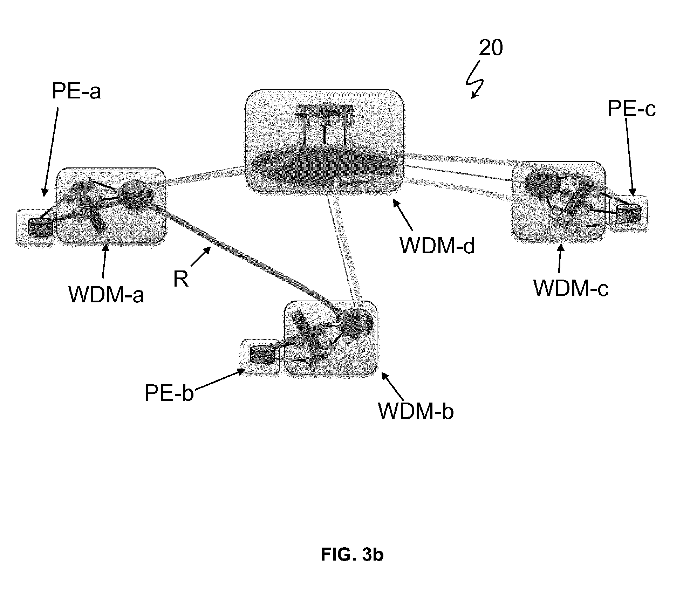

En référence à la **figure 3b****,** le présent procédé de routage de données est mis en oeuvre au sein d'un système comprenant un réseau optique opérateur 20 (i.e. un réseau « de transmission »), une pluralité de routeurs de bordure PE-a, PE-b, PE-c, et une pluralité d'équipements de transmission WDM-a, WDM-b, WDM-c, WDM-d interconnectés, système ne comprenant de façon préférée que des routeurs PE, en d'autres termes aucun routeur de transit (routeur P). Pour reformuler encore, le système ne comprend que des routeurs connectés à des clients de l'opérateur et des réseaux d'autres opérateurs (c'est à dire les routeurs PE), et donc ne comprend pas de routeur uniquement connecté au réseau optique 20 (c'est-à-dire les routeurs P).

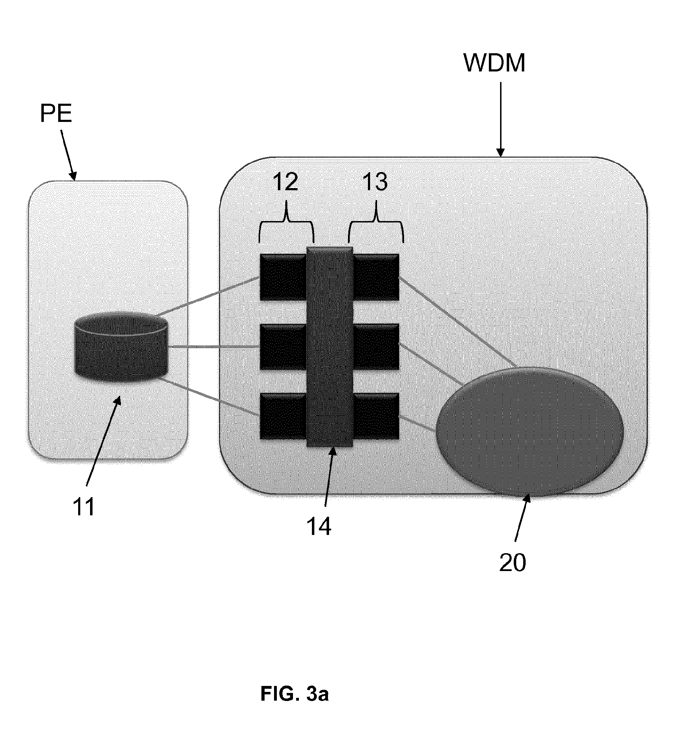

Chaque routeur PE est associé à un équipement WDM configuré pour transmettre des données au sein du réseau 20 pour ce routeur PE (en d'autres termes, chaque routeur PE est connecté au réseau optique 20 via son équipement WDM), conformément à l'architecture représentée sur la **figure 3a****.** Chaque routeur PE communique avec son équipement WDM sous forme d'un « signal client » qui est typiquement au format physique Ethernet (IEEE 802.3).

On note que chaque routeur PE est associé à un équipement WDM, mais que la réciproque n'est pas forcément vraie. Il peut ainsi y avoir des équipements WDM associés à aucun routeur, à l'instar de l'équipement WDM-d de la figure 3b, équipement qui était initialement utilisé par le routeur P. De façon préférée, les équipements de transmission WDM-a, WDM-b, WDM-c, WDM-d sont uniquement connectés à des routeurs de bordure PE-a, PE-b, PE-c et/ou d'autres équipements de transmission WDM-a, WDM-b, WDM-c, WDM-d. Comme l'on voit sur la figure 3b, les équipements WDM intermédiaires (par exemple WDM-d) qui ne sont connectés à aucun routeur n'ont pas besoin de comprendre d'interface client 12 (puisque les données restent au sein de l'équipement WDM).

Le présent procédé permet d'envoyer des données d'un routeur d'origine PE-a à un routeur de destination PE-b via le réseau optique 20 « directement », sans qu'elles ne rencontrent aucun autre routeur, a fortiori pas de routeur P, et donc sans que les données soient reçues et réémises à l'extérieur du réseau optique comme c'était le cas sur la figure 1 b. On note que dans l'exemple de la figure 3b on peut considérer que chaque routeur PE est directement connecté aux deux autres routeurs PE bien que trois cas se présentent :
- Cas 1 → Routeur PE-a / routeur PE-b (route R) : on a une connexion directe entre l'équipement WDM-a associé au routeur PE-a et l'équipement WDM-b associé au routeur PE-b. Un seul OCH compose le chemin entre ces deux équipements WDM-a et WDM-b ;
- Cas 2 → Routeur PE-b / routeur PE-c : bien que les données optiques transitent par l'équipement WDM-d, il s'agit d'une traversée « transparente », c'est-à-dire qu'il n'y a aucune encapsulation ou désencapsulation de données au sein de cet équipement WDM-d et les données n'ont pas « conscience » de transiter par un équipement tiers. On a toujours une connexion directe entre l'équipement WDM-b associé au routeur PE-b et l'équipement WDM-c associé au routeur PE-c car un seul OCH compose à nouveau ce chemin ;
- Cas 3 → Routeur PE-a / routeur PE-c : la traversée de l'équipement WDM-d n'est cette fois pas transparente et le chemin entre l'équipement WDM-a associé au routeur PE-a et l'équipement WDM-c associé au routeur PE-c comprend deux OCH (le premier entre les équipements WDM-a et WDM-d, et le deuxième entre les équipements WDM-d et WDM-c). Les données subissent donc une encapsulation et une désencapsulation intermédiaire dans l'équipement WDM-d comme on le verra plus loin, mais ne sortent pas de cet équipement WDM-d. Quand bien même un routeur serait connecté à cet équipement WDM-d, ce routeur est ignoré

Certaines routes sont donc plus longues que d'autres, mais il n'y a jamais de réception et réémission des données par un routeur intermédiaire. Par « directement », on entend donc sans passer par un routeur intermédiaire, mais indépendamment du trajet optique inter-équipements WDM. On comprendra donc qu'une route « directe » peut outre des équipements d'origine WDM-a et de destination WDM-b, WDM-c transiter par n'importe quel nombre d'équipements intermédiaires WDM-d permettant l'aiguillage des conteneurs au sein du réseau optique 20. Il est à noter que des équipements WDM de différents fournisseurs peuvent cohabiter dans le réseau 20 et nécessiter entre deux équipements connectés une brève transition en signal client (mais sans toucher au format ODU des données), et on comprendra qu'un tel lien reste direct.

Le présent procédé est un procédé de routage de données à transmettre au sein du réseau 20 émises depuis un routeur de bordure d'origine PE-a, mais il est transposable, et de façon préférée chaque routeur PE du réseau 20 sera capable de le mettre en oeuvre et de transmettre des données à n'importe quel autre routeur PE. Par convention, on choisira qu'au moins une partie des données à transmettre sont à destination d'au moins deux routeurs de bordure de destination PE-b, PE-c.

Comme expliqué, chaque routeur PE comprend des moyens de traitement de données 11 (en particulier un processeur) et est associé à un équipement WDM comprenant des interfaces 12, 13 configurées pour transmettre des données au sein du réseau 20 pour le routeur PE, sous forme de conteneurs de type Optical channel Data Unit (ODU) via un canal optique (OCH). Contrairement à l'art antérieur où l'on avait souvent un grand nombre d'interfaces de faible capacité, de façon préférée chaque couple routeur PE/équipement WDM impliqué dans le présent procédé comprend un faible nombre d'interfaces (typiquement au maximum quatre, en particulier trois comme l'on voit sur la figure 3b) de forte capacité : chaque interface 12, 13 est de façon préférée une interface 40 gigabits Ethernet, voire 100 gigabits Ethernet (norme IEEE 802.3ba). En pratique, une interface physique 13 par équipement WDM « voisin » (c'est-à-dire directement connecté) suffit.

On comprendra qu'il est tout à fait possible de conserver les interfaces actuelles en termes de nombre de ports et de capacité (typiquement 80x10 gigabits), éventuellement en utilisant un ou plusieurs LAG (« Link Aggregation Group », c'est-à-dire un groupe d'interfaces se comportant comme une interface unique) pour réduire leur nombre, par exemple des LAG de 8x10 gigabits. Dans la suite de la présente description, par « interface » on entendra une interface unique ou un LAG.

### Mutualisation d'interfaces

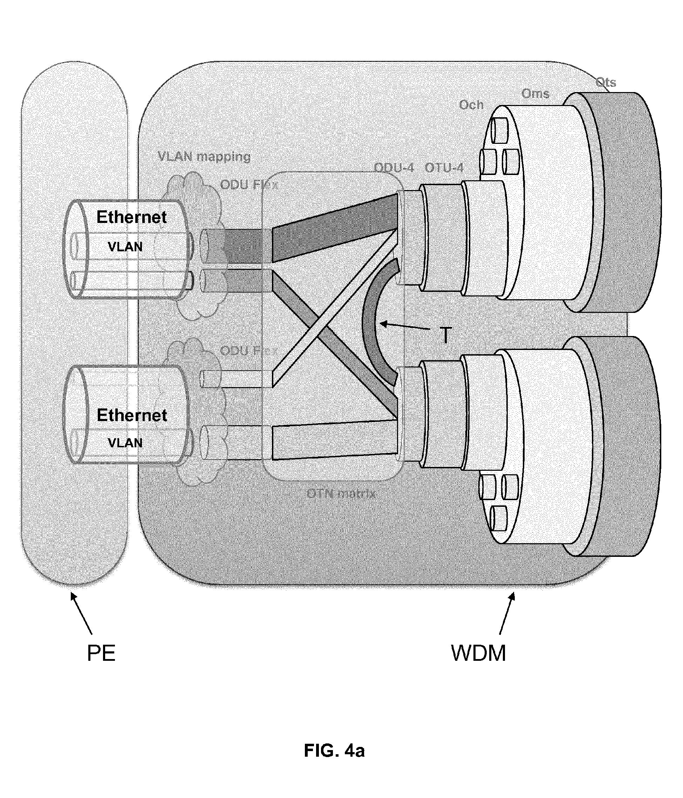

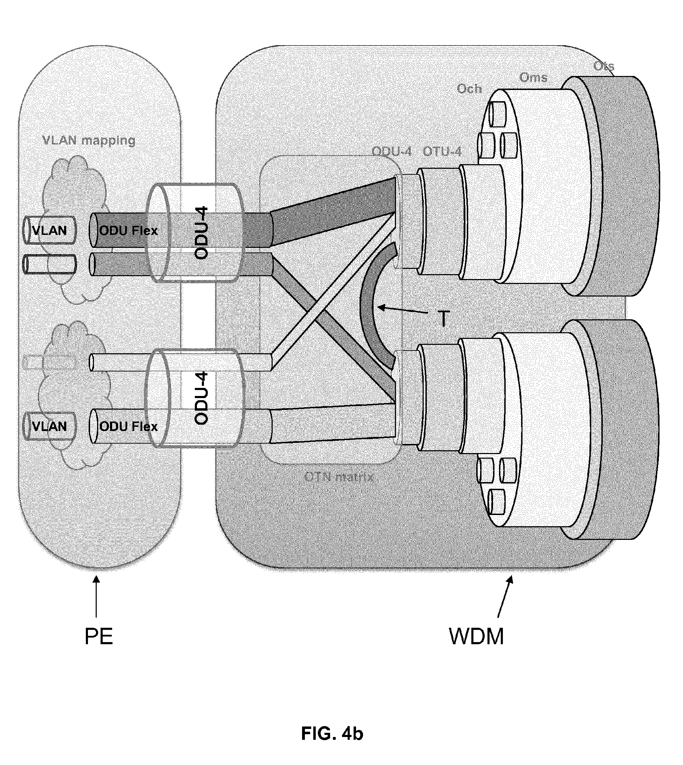

Le présent procédé propose une utilisation originale de la combinaison d'encapsulation ODU-Flex et de mise en correspondance de VLAN (mapping) avec les ODU, visible aux **figures 4a** **et** **4b****,** qui représentent schématiquement deux modes de réalisation d'une connexion d'un routeur PE et d'un équipement WDM.

Les deux mécanismes précités combinés permettent d'utiliser une seule interface (ou un seul LAG) vers plusieurs destinations, contrairement à ce qui était imposé auparavant. Plus précisément, le VLAN mapping permet de séparer les données reçues par un routeur PE selon leur destination. ODU-Flex permet ensuite de préparer le terrain à une recombinaison de ces flux au sein d'une « matrice OTN » 14, qui est un composant d'un équipement WDM (typiquement une carte), en un ou plusieurs ODU chacun associé à un OCH (voir également la figure 3a). La matrice OTN reproduit implicitement le rôle d'un routeur P, et connecte les interfaces client 12 et interfaces physiques 13 de l'équipement WDM.

En d'autres termes, chaque interface peut être « reconfigurée » en permanence par le mapping et on s'affranchit de la nécessité d'avoir une destination associée à chaque interface. On reproduit ainsi virtuellement une solution de maillage complet sans la nécessité d'avoir une interface affectée par destination.

Là où chaque interface/LAG était un « tuyau » de destination prédéfini, ODU-Flex et le VLAN mapping permettent de les mutualiser comme illustré par les figures 4a ou 4b. Plus le réseau comprend un grand nombre de routeurs PE, plus le présent procédé est intéressant. On comprendra bien évidemment qu'une pluralité de VLAN est utilisée pour une interface (ou LAG).

Plus concrètement, le procédé comprend la mise en oeuvre par les moyens de traitement de données d'étapes de :
(a) Séparation par le (ou les) routeur de bordure d'origine PE-a des données à transmettre au sein du réseau optique opérateur 20 en une pluralité de flux chacun associé à un réseau local virtuel (VLAN) selon le routeur de bordure PE-b, PE-c auquel les données sont destinées, chaque VLAN étant associé à un routeur de bordure de destination PE-b, PE-c. Il s'agit de l'étape de « mapping ». Plus précisément, chaque flux contenu dans les données arrivant dans l'interface 12 est préalablement étiqueté avec l'identifiant d'un VLAN en fonction de sa destination. Le mapping VLAN permet de séparer ces flux. Il suffit de prévoir autant de VLAN (voire davantage) que de destinations possibles pour permettre n'importe quel transfert de données au sein du réseau 20 sans passer par un routeur P.
(b) encapsulation par le (ou les) routeur de bordure d'origine PE-a ou l'équipement WDM-a qui lui est associé de chaque flux dans un conteneur ODU de taille flexible (ODU-Flex). Le conteneur ODU-Flex a une taille qui s'adapte à chacun des flux, comme l'on voit toujours sur la figure 4a ou 4b. Chaque conteneur ODU-Flex est associé à un chemin dans le réseau optique opérateur 20 entre le routeur de bordure d'origine PE-a et le routeur de bordure de destination PE-b, PE-c du flux, ledit chemin étant défini par une séquence de canaux optiques OCH à parcourir, chaque OCH reliant comme expliqué un premier et un deuxième équipements de transmission WDM-a, WDM-b, WDM-c, WDM-d du réseau optique opérateur 20. Par convention, les données transitant sur un OCH vont du premier équipement WDM au deuxième équipement WDM. Par transitivité, le deuxième équipement WDM d'un OCH est le premier équipement de l'OCH suivant, et ainsi de suite. Il est à noter que les chemins dans le réseau optique 20 sont connus et listés dans des tables.
(c) pour chaque OCH du chemin (et pour chaque chemin), encapsulation par le premier équipement de transmission WDM-a, WDM-b, WDM-c, WDM-d des conteneurs ODU-Flex à transporter via l'OCH dans un conteneur ODU de taille fixe (conteneur ODU-0 à 4) associé à l'OCH émis par un port 13 ; et extraction (désencapsulation) par le deuxième équipement de transmission WDM-a, WDM-b, WDM-c, WDM-d de chaque conteneur ODU-Flex dans le conteneur ODU de taille fixe associé à l'OCH. La première encapsulation est faite l'équipement de transmission WDM-a associé au routeur de bordure d'origine PE-a, et la dernière extraction est faite par l'équipement de transmission WDM-b, WDM-c associé au routeur de bordure de destination PE-b, PE-c. En cas de chemin « indirect » (c'est-à-dire comprenant plus d'un OCH), des équipements WDM « intermédiaires » sont impliqués et réalisent une encapsulation/extraction, comme l'on verra plus tard. Dans tous les cas, ce travail est mis en oeuvre par la matrice OTN 14 de chaque équipement WDM et permet de décorréler une interface d'une destination donnée. Dans le cas d'un équipement intermédiaire, le chemin T de la figure 4b est emprunté par les ODU-Flex dans la matrice OTN 14 (figure 4b) ;
(d) extraction par le (ou les) routeur de bordure de destination PE-b, PE-c ou l'équipement de transmission WDM-b, WDM-c associé du flux de données dans chaque conteneur ODU-Flex ; et recombinaison des flux. Il s'agit du travail inverse de l'étape (b) et dans une moindre mesure de l'étape (a), car la recombinaison est une étape simple (puisque tous les flux sont « arrivés » et qu'il n'y a plus lieu de se poser la question de leur destination)

Ainsi, les flux sont doublement encapsulés : dans un ODU-Flex lui-même dans un ODU fixe. On respecte ainsi les contraintes de la norme, puisque chaque ODU fixe est bien associé à un OCH (et donc deux interfaces physiques 13 données), et l'encapsulation ODU-Flex permet au flux de passer d'un ODU fixe à un autre, et l'ensemble du réseau se comporte de sorte à ce qu'un conteneur ODU-Flex associé à un routeur de bordure de destination PE-b, PE-c soit transmis du routeur de bordure d'origine PE-a au routeur de bordure de destination PE-b, PE-c sans traverser de routeur intermédiaire (en ne traversant que des équipements WDM).

### Chemins indirects

Il est important de comprendre que l'étape (c) est mise en oeuvre itérativement autant de fois qu'il y a d'OCH dans le chemin, le deuxième équipement WDM d'un OCH devenant le premier équipement WDM de l'OCH suivant.

Dans le cas 1 (et similairement dans le cas 2) évoqué plus haut, il y a existence d'une connexion directe entre l'équipement WDM-a associé au routeur d'origine PE-a et l'équipement WDM-b associé au routeur de destination PE-b. En d'autres termes, le chemin ne comprend qu'un OCH (route R sur la figure 3b). Le premier équipement WDM est ainsi l'équipement WDM-a associé au routeur d'origine PE-a et le deuxième équipement WDM est l'équipement WDM-b associé au routeur de destination PE-b. L'étape (c) n'est ainsi mise en oeuvre qu'une fois (pour ce chemin), et consiste en l'encapsulation par l'équipement de transmission WDM-a associé au routeur de bordure d'origine PE-a des conteneurs ODU-Flex à transporter via l'OCH dans un conteneur ODU de taille fixe associé à l'OCH ; et l'extraction par l'équipement de transmission WDM-b associé au routeur de bordure de destination PE-b de chaque conteneur ODU-Flex dans le conteneur ODU de taille fixe associé à l'OCH.

Dans le cas 3, il y a existence d'un équipement de transmission intermédiaire (l'équipement WDM-d dans l'exemple représenté), et la connexion entre l'équipement WDM-a associé au routeur d'origine PE-a et l'équipement WDM-c associé au routeur de destination PE-c est indirecte. En d'autres termes le chemin ne comprend que deux OCH :
- pour le 1^{er} OCH, le premier équipement WDM est l'équipement WDM-a associé au routeur d'origine PE-a et le deuxième équipement WDM est l'équipement « intermédiaire » WDM-d ;
- pour le 2^{ème} OCH, le premier équipement WDM est l'équipement « intermédiaire » WDM-d et le deuxième équipement WDM est l'équipement WDM-c associé au routeur de destination PE-c. L'équipement WDM intermédiaire extrait les ODU-Flex d'un ODU fixe reçu pour les réencapsuler dans un nouvel ODU fixe.

De façon générale, on comprendra que dès qu'un chemin comprend un passage par un équipement intermédiaire (i.e. le chemin dans le réseau optique opérateur 20 entre le routeur de bordure d'origine PE-a et le routeur de bordure de destination PE-c), il comprend au moins un premier et un deuxième OCH. L'équipement intermédiaire WDM-d est le premier équipement (équipement WDM de départ du canal) pour le deuxième OCH et le deuxième équipement (équipement WDM d'arrivée du canal) pour le premier OCH), l'étape (c) comprend l'extraction par l'équipement de transmission intermédiaire WDM-d de chaque conteneur ODU-Flex dans un conteneur ODU de taille fixe associé au premier OCH ; et l'encapsulation par l'équipement de transmission intermédiaire WDM-d des conteneurs ODU-Flex à transporter via le deuxième OCH (qui ne sont pas forcément les mêmes que ceux extraits, voir paragraphe suivant) dans un conteneur ODU de taille fixe associé au deuxième OCH.

Il est à noter qu'une pluralité de chemins est simultanément suivie dans le réseau, et qu'un même équipement WDM peut tout à fait cumuler plusieurs des rôles d'équipement d'origine, de destination, et d'équipement intermédiaire (et même plusieurs fois chacun). Typiquement, les ODU-Flex extraits d'un ODU fixe par un équipement (intermédiaire) WDM peuvent être réencapsulés dans plusieurs ODU fixes associés à plusieurs OCH (et donc plusieurs destinations). Une partie de ces ODU-Flex peut ne pas être réexpédiée si l'équipement intermédiaire est également un équipement de destination. Ces derniers ODU-Flex sont désencapsulés pour extraire les flux (étape (d)).

### Système

Selon un deuxième aspect est proposé un système pour la mise en oeuvre du procédé selon le premier aspect.

Ce système est comme expliqué un système de routage de données au sein d'un réseau optique opérateur 20 comprenant une pluralité de routeurs de bordure PE-a, PE-b, PE-c (avantageusement comprenant seulement des routeurs PE, i.e. aucun routeur P), chacun associé à un équipement de transmission WDM-a, WDM-b, WDM-c, WDM-d configuré pour transmettre des données au sein du réseau 20 pour lesdits routeur de bordure PE-a, PE-b, PE-c. Comme expliqué, les routeurs de bordure PE-a, PE-b, PE-c comprennent des moyens de traitement de données 11 et les équipements de transmission WDM comprenant au moins une interface 12 configurée pour recevoir des signaux clients de la part des routeurs et une interface 13 configurée pour transmettre des signaux optiques au sein du réseau 20, et une matrice OTN 14 :
- au moins un routeur de bordure d'origine PE-a (avantageusement chaque routeur PE) est configuré pour séparer des données à transmettre au sein du réseau optique opérateur 20 en une pluralité de flux chacun associé à un réseau local virtuel (VLAN) selon le routeur de bordure PE-b, PE-c auquel les données sont destinées, chaque VLAN étant associé à un routeur de bordure de destination PE-b, PE-c;
- le (ou les) routeur de bordure d'origine PE-a ou l'équipement de transmission WDM-a associé est configuré pour encapsuler chaque flux dans un conteneur ODU de taille flexible (ODU-Flex), ledit conteneur ODU-Flex étant associé à un chemin dans le réseau optique opérateur 20 entre le routeur de bordure d'origine PE-a et le routeur de bordure de destination PE-b, PE-c dudit flux, ledit chemin étant défini par une séquence de canaux optiques (OCH) à parcourir, chaque OCH reliant un premier et un deuxième équipements de transmission WDM-a, WDM-b, WDM-c, WDM-d du réseau optique opérateur 20 ;
   - le (ou les) routeur de bordure de destination PE-b, PE-c ou l'équipement de transmission WDM-b, WDM-c associé est configuré pour extraire le flux de données de chaque conteneur ODU-Flex, et recombiner les flux ;
   - chaque équipement de transmission WDM-a, WDM-b, WDM-c, WDM-d est configuré pour :
      o encapsuler des conteneurs ODU-Flex à transporter via un OCH pour lequel il est le premier équipement de transmission (i.e. équipement WDM de départ du canal) dans un conteneur ODU de taille fixe associé à l'OCH ; et
      o extraire chaque conteneur ODU-Flex d'un conteneur ODU de taille fixe associé à un OCH pour lequel il est le deuxième équipement de transmission (i.e. l'équipement WDM d'arrivée du canal) ;
      les éventuels équipements WDM intermédiaires réalisent consécutivement l'extraction et l'encapsulation, comme expliqué préalablement. Ils jouent le rôle d'aiguiller les ODU-Flex d'un OCH au suivant pour le transport jusqu'à un autre équipement intermédiaire ou jusqu'à l'équipement de destination.

Comme expliqué précédemment, de façon préférée le système ne comprend plus que des routeurs de bordure PE (plus de routeurs de transit P), et tous les routeurs de bordure PE-a, PEb, PE-c (et pas seulement premier routeur PE-a) sont alors configuré similairement.

Ainsi, le réseau opérateur 20 comprend préférentiellement uniquement des routeurs de bordure PE-a, PE-b, PE-c (i.e. pas de routeur P), directement connectés les uns aux autres, c'est à dire que les équipements de transmission WDM-a, WDM-b, WDM-c, WDM-d sont uniquement connectés à des routeurs de bordure PE-a, PE-b, PE-c et/ou d'autres équipements de transmission WDM-a, WDM-b, WDM-c, WDM-d.

Comme l'on voit, certaines tâches (correspondant aux étapes (b) et (d)) peuvent être mises en oeuvre indifféremment par le routeur PE ou l'équipement WDM associé.

Dans le schéma de la figure 4a, c'est l'équipement WDM qui réalise tout le travail (hormis le mapping VLAN de l'étape (a)), i.e. c'est l'équipement WDM qui est configuré pour encapsuler chaque flux dans un conteneur ODU-Flex, extraire le flux de données de chaque conteneur ODU-Flex, et recombiner les flux. Le routeur PE lui fournit directement les données Ethernet taggées en VLANs, et l'équipement WDM met en oeuvre l'encapsulation des flux taggés dans des ODU-Flex. Dans ce mode de réalisation, chaque équipement de transmission WDM-a, WDM-b, WDM-c associé à un routeur de bordure PE-a, PE-b, PE-c inclut les interfaces client 12, des interfaces client 12 sont connectées à des interfaces physiques 13 de l'équipement WDM via la matrice OTN 14.

Alternativement, dans le schéma de la figure 4b, les étapes (b) et (d) sont mises en oeuvre par le routeur PE. Le routeur PE fournit un flux déjà encapsulé dans un ODU fixe, en particulier un ODU-4 (conformément à la norme OTN), que l'équipement WDM va désencapsuler (pour extraire les ODU-Flex) et réaliser l'aiguillage au même titre que si ce conteneur ODU-4 était reçu depuis un autre équipement WDM. Il est à noter que dans un tel mode, l'équipement WDM n'a pas conscience de l'existence des VLAN. Ce mode de réalisation est particulièrement intéressant, car il permet d'utiliser des équipements WDM actuels en l'état (conformes à la norme et équipés de matrices OTN 14), il suffit de configurer adéquatement les routeurs PE (disposant des fonctionnalités OTN nécessaires) et de débrancher les routeurs P d'une architecture existante pour obtenir le présent système.

En outre, il est tout à fait possible de mixer les deux modes de réalisation, en prévoyant certains couples routeur PE/équipement WDM conformes à la figure 4a, et d'autres conformes à la figure 4b.

### Produit programme d'ordinateur

Selon un troisième et un quatrième aspects, l'invention concerne un produit programme d'ordinateur comprenant des instructions de code pour l'exécution (en particulier sur les moyens de traitement de données 11 d'un ou plusieurs routeurs PE et/ou des équipements de transmission WDM associés) du procédé de routage de données à transmettre au sein d'un réseau optique opérateur 20, ainsi que des moyens de stockage lisibles par un équipement informatique (notamment une mémoire du ou des routeurs PE et/ou des équipements de transmission WDM associés) sur lequel on trouve ce produit programme d'ordinateur.

## Revendications

1. Procédé de routage de données à transmettre au sein d'un réseau optique opérateur (20) depuis au moins un routeur de bordure d'origine (PE-a) vers au moins un routeur de bordure de destination (PE-b, PE-c), chaque routeur de bordure (PE-a, PE-b, PE-c) étant associé à un équipement de transmission (WDM-a, WDM-b, WDM-c, WDM-d) configuré pour transmettre des données au sein du réseau optique opérateur (20) pour ledit routeur de bordure (PE-a, PE-b, PE-c), le procédé étant **caractérisé en ce qu'**il comprend la mise en oeuvre d'étapes de :
(a) séparation par le routeur de bordure d'origine (PE-a) des données à transmettre au sein du réseau optique opérateur (20) depuis le routeur de bordure d'origine (PE-a) en une pluralité de flux chacun associé à un réseau local virtuel (VLAN) selon le routeur de bordure (PE-b, PE-c) auquel les données sont destinées, chaque VLAN étant associé à un routeur de bordure de destination (PE-b, PE-c) ;
(b) encapsulation par le routeur de bordure d'origine (PE-a) ou l'équipement de transmission (WDM-a) associé de chaque flux dans un conteneur ODU de taille flexible (ODU-Flex), ledit conteneur ODU-Flex étant associé à un chemin dans le réseau optique opérateur (20) entre le routeur de bordure d'origine (PE-a) et le routeur de bordure de destination (PE-b, PE-c) dudit flux, ledit chemin étant défini par une séquence de canaux optiques (OCH) à parcourir, chaque OCH reliant un premier et un deuxième équipements de transmission (WDM-a, WDM-b, WDM-c, WDM-d) du réseau optique opérateur (20) ;
(c) pour chaque OCH dudit chemin, encapsulation par le premier équipement de transmission (WDM-a, WDM-b, WDM-c, WDM-d) des conteneurs ODU-Flex à transporter via l'OCH dans un conteneur ODU de taille fixe associé à l'OCH ; et extraction par le deuxième équipement de transmission (WDM-a, WDM-b, WDM-c, WDM-d) de chaque conteneur ODU-Flex dans le conteneur ODU de taille fixe associé à l'OCH ;
(d) extraction par le routeur de bordure de destination (PE-b, PE-c) ou l'équipement de transmission (WDM-b, WDM-c) associé du flux de données dans chaque conteneur ODU-Flex ; et recombinaison des flux.

2. Procédé selon la revendication 1, dans lequel l'étape (c) est mise en oeuvre uniquement au sein d'équipements de transmission (WDM-a, WDM-b, WDM-c, WDM-d) de sorte à ce qu'aucun flux ne transite par un routeur de bordure (PE) autre que les routeurs de bordure d'origine et de destination (PE-a, PE-b, PE-c) du flux.

3. Procédé selon l'une des revendications 1 et 2, dans lequel l'équipement de transmission (WDM-a) associé au routeur de bordure d'origine (PE-a) est directement connecté à l'équipement de transmission (WDM-b) associé au routeur de bordure de destination (PE-b), de telle sorte que le chemin dans le réseau optique opérateur (20) entre le routeur de bordure d'origine (PE-a) et le routeur de bordure de destination (PE-b) ne comprend qu'un OCH, l'étape (c) consistant en l'encapsulation par l'équipement de transmission (WDM-a) associé au routeur de bordure d'origine (PE-a) des conteneurs ODU-Flex à transporter via l'OCH dans un conteneur ODU de taille fixe associé à l'OCH ; et l'extraction par l'équipement de transmission (WDM-b) associé au routeur de bordure de destination (PE-b) de chaque conteneur ODU-Flex dans le conteneur ODU de taille fixe associé à l'OCH.

4. Procédé selon l'une des revendications 1 et 2, dans lequel l'équipement de transmission (WDM-a) associé au routeur de bordure d'origine (PE-a) est connecté à l'équipement de transmission (WDM-c) associé au routeur de bordure de destination (PE-c) via au moins un équipement de transmission intermédiaire (WDM-d), de telle sorte que le chemin dans le réseau optique opérateur (20) entre le routeur de bordure d'origine (PE-a) et le routeur de bordure de destination (PE-c) comprend au moins un premier et un deuxième OCH, l'étape (c) comprenant l'extraction par l'équipement de transmission intermédiaire (WDM-d) de chaque conteneur ODU-Flex dans un conteneur ODU de taille fixe associé au premier OCH ; et l'encapsulation par l'équipement de transmission intermédiaire (WDM-d) des conteneurs ODU-Flex à transporter via le deuxième OCH dans un conteneur ODU de taille fixe associé au deuxième OCH.

5. Système de routage de données au sein d'un réseau optique opérateur (20) comprenant une pluralité de routeurs de bordure (PE-a, PE-b, PE-c) chacun associé à un équipement de transmission (WDM-a, WDM-b, WDM-c, WDM-d) configuré pour transmettre des données au sein du réseau (20) pour ledit routeur de bordure (PE-a, PE-b, PE-c), **caractérisé en ce que** :
- au moins un routeur de bordure d'origine (PE-a) est configuré pour séparer des données à transmettre au sein du réseau optique opérateur (20) en une pluralité de flux chacun associé à un réseau local virtuel (VLAN) selon le routeur de bordure (PE-b, PE-c) auquel les données sont destinées, chaque VLAN étant associé à un routeur de bordure de destination (PE-b, PE-c) ;
- le routeur de bordure d'origine (PE-a) ou l'équipement de transmission (WDM-a) associé est configuré pour encapsuler chaque flux dans un conteneur ODU de taille flexible (ODU-Flex), ledit conteneur ODU-Flex étant associé à un chemin dans le réseau optique opérateur (20) entre le routeur de bordure d'origine (PE-a) et le routeur de bordure de destination (PE-b, PE-c) dudit flux, ledit chemin étant défini par une séquence de canaux optiques (OCH) à parcourir, chaque OCH reliant un premier et un deuxième équipements de transmission (WDM-a, WDM-b, WDM-c, WDM-d) du réseau optique opérateur (20) ;
- le routeur de bordure de destination (PE-b, PE-c) ou l'équipement de transmission (WDM-b, WDM-c) associé est configuré pour extraire le flux de données de chaque conteneur ODU-Flex, et recombiner les flux ;
- chaque équipement de transmission (WDM-a, WDM-b, WDM-c, WDM-d) est configuré pour :
o encapsuler des conteneurs ODU-Flex à transporter via un OCH pour lequel il est le premier équipement de transmission dans un conteneur ODU de taille fixe associé à l'OCH ; et
o extraire chaque conteneur ODU-Flex d'un conteneur ODU de taille fixe associé à un OCH pour lequel il est le deuxième équipement de transmission ;

6. Système selon la revendication 5, dans lequel les équipements de transmission (WDM-a, WDM-b, WDM-c, WDM-d) sont uniquement connectés à des routeurs de bordure (PE-a, PE-b, PE-c) et/ou d'autres équipements de transmission (WDM-a, WDM-b, WDM-c, WDM-d).

7. Système selon la revendication 6, ne comprenant aucun routeur de transit (P).

8. Système selon l'une des revendications 5 à 7, dans lequel chaque équipement de transmission (WDM-a, WDM-b, WDM-c, WDM-d) comprend au moins une interface physique (13) et une matrice OTN (14).

9. Système selon la revendication 8, dans lequel chaque équipement de transmission (WDM-a, WDM-b, WDM-c) associé à un routeur de bordure (PE-a, PE-b, PE-c) comprend en outre au moins une interface client (12) permettant la connexion de l'équipement de transmission (WDM-a, WDM-b, WDM-c) au routeur de bordure (PE-a, PE-b, PE-c), l'interface client (12) étant connectée à l'interface physique (13) via la matrice OTN (14).

10. Système selon la revendication 9, dans lequel chaque interface client (12) d'un équipement de transmission (WDM-a, WDM-b, WDM-c, WDM-d) est une interface 100 gigabits Ethernet.

11. Produit programme d'ordinateur comprenant des instructions de code pour l'exécution d'un procédé selon l'une des revendications 1 à 4 de routage de données à transmettre au sein d'un réseau optique opérateur (20).

12. Moyens de stockage lisibles par un équipement informatique sur lesquels un produit programme d'ordinateur comprend des instructions de code pour l'exécution d'un procédé selon l'une des revendications 1 à 4 de routage de données à transmettre au sein d'un réseau optique opérateur (20).
